# EUROPÄISCHE PATENTSCHRIFT

(11) **EP 0 606 596 B1**
(45) Veröffentlichungstag und Bekanntmachung des Hinweises auf die Patenterteilung: **05.03.1997**
(21) Anmeldenummer: 93120094.3
(22) Anmeldetag: 14.12.1993
(51) Int. Cl.: H01F 41/06, H01F 19/04

(54) **Einrichtung zum Wickeln einer Innenspule eines Übertragers**
Winding device for inner coil of transformer
Dispositif pour enrouler une bobine intérieure d'un transformateur

(30) Priorität: 14.01.1993 DE 4300756
(43) Veröffentlichungstag der Anmeldung: 20.07.1994
(73) Patentinhaber: Grundig E.M.V. Elektro-Mechanische Versuchsanstalt Max Grundig GmbH & Co. KG, 90762 Fürth (DE)
(72) Erfinder: Ditz, Alfred, D-90748 Fürth (DE)

(56) Entgegenhaltungen:
- DE-A- 3 626 275
- DE-A- 3 831 721
- PATENT ABSTRACTS OF JAPAN, unexamined applications, E Field, Band 14, Nr. 336, 19. Juli 1990 THE PATENT OFFICE JAPANESE GOVERNMENT Seite 82 E 953; & JP-A-02-113 511 (HITACHI)

## Beschreibung

Die Erfindung bezieht sich auf eine Einrichtung zum Wickeln einer Innenspule eines Übertragers gemäß dem Oberbegriffs des Anspruchs 1.

Bei Videorecordern oder Recordern für digitale Aufzeichnung und Wiedergabe von Signalen auf oder von einem Magnetband, ist es bekannt, rotierende Kopfräder mit einem oder mehreren Köpfen einzusetzen. Die Signale sind dabei mittels Schrägspuren auf dem Magnetband aufgezeichnet. Um die Signale zwischen einem Kopfrad und dem feststehenden Teil einer Kopftrommel übertragen zu können, werden bekanntermaßen Drehtransformatoren verwendet. Diese Drehtransformatoren, kurz Übertrager genannt, bestehen in den meisten Fällen aus einem feststehenden Teil, der der feststehenden Kopftrommel zugeordnet ist und aus einem dem drehenden Kopfrad zugeordneten und mit diesem sich drehenden Teil. Beide Teile sind mit je einer Wicklung versehen. Eine Kopftrommel-Anordnung muß so viele Übertrager besitzen, wie Köpfe auf dem Kopfrad vorhanden sind.

Die Verwendung solcher Übertrager ist beispielsweise aus der Offenlegungsschrift DE-A1-38 10 037 bekannt. Die dort eingesetzten Übertrager bestehen aus inneren und äußeren Ferritkernen, die jeweils eine Wicklung besitzen. Die Signalübertragung erfolgt radial zwischen den im äußeren, feststehenden Teil und den im inneren, drehenden Teil befindlichen Ferritringen.

Bei der Miniaturisierung von Kopftrommel-Einheiten sowie bei der Erhöhung der zu übertragenden Frequenzen und/oder bei steigender Anzahl von Übertragern, wie es insbesondere bei Digital-Recordern der Fall ist, verringert sich zwangsläufig das Volumen der Übertrager. Das bedeutet, daß die Genauigkeitsforderungen, die an die Übertrager gestellt werden, immer größer werden. Das betrifft eines Teils die Ferritringe selbst, wie zum Beispiel den Spalt zwischen Außen- und Innenring und andererseits die Wicklungen. Die Wicklungen, die aus einem sehr dünnen Draht bestehen (zum Beispiel in der Größenordnung von 0,15 mm ⌀), müssen auf sehr engem Raum sehr exakt gewickelt werden. Um eine möglichst genau definierte Wicklung in einem Ferritkern unterzubringen, werden teilweise unterstützende Hilfsmittel eingesetzt.

So ist aus DE-A1-38 31 721 ein Drehübertrager für einen Recorder bekannt, der einen radial wirkenden Übertrager verwendet. Zur exakten Führung der Drahtwicklung wird dort ein Kunststoffkörper mit Nuten verwendet, der einfach herstellbar ist und eine größe Genauigkeit der Wicklung gewährleistet.

Die Verwendung eines solchen Hilfsmittels ist jedoch relativ aufwendig. Die Handhabung eines Kunststoffringes in dieser Kleinheit ist außerdem sehr schwierig.

Es ist Aufgabe der Erfindung, eine Einrichtung zu schaffen, mit der die Wicklung des Außenrings eines Übertragers mit sehr großer Genauigkeit auf möglichst einfache und preiswerte Art herstellbar ist. Der Wicklungsdraht soll dabei ohne weitere zusätzliche Teile in die Innennut des Außenrings eingebracht werden.

Diese Aufgabe wird durch die Merkmale des kennzeichnenden Teils des Anspruchs 1 gelöst. Zweckmäßige Ausführungen werden in den Unteransprüchen beschrieben.

Das Herstellen von Wicklungen direkt in eine Wickelnut eines Ferritrings eines axialen Übertragers ist aus DE-A1-36 26 275 bekannt. Mit dieser Einrichtung wird in eine axiale Nut in der Planfläche eines Ferritrings eine Drahtwicklung eingewickelt. Dies geschieht mit Hilfe einer konzentrisch zum Ferritring gelagerten und sich drehenden Wickelscheibe, in die der Wicklungsdraht durch einen Führungsschlitz eingeführt ist. Sinn dieser Einrichtung ist es, vorgefertigte Spulen die durch große Toleranzen oft nicht in die Wickelnut eingelegt werden können, zu ersetzen.

Die erfindungsgemäße Einrichtung dient im Gegensatz zu der Einrichtung aus DE-A1-36 26 275 dazu, in die Innennut eines Ferritrings eines radialen Übertragers eine Wicklung einzubringen. Das ist insofern notwendig, da zum einen das Einsetzen einer vorgefertigten Wicklung in eine Innennut sehr schwierig ist und andererseits die Genauigkeit des Innendurchmessers der Wicklung sehr groß sein muß.

Die Erfindung wird nun anhand der Zeichnungen näher erläutert.

Es zeigen
- Fig. 1: den Außenring eines Übertragers in Planschnittdarstellung,
- Fig. 2: dasselbe Teil in einem Achsschnitt,
- Fig. 3: ein Beispiel einer erfindungsgemäßen Einrichtung mit dem Übertrager in Schnittdarstellung und
- Fig. 4: die Einrichtung aus Fig. 1 in Blickrichtung nach Pfeil A.

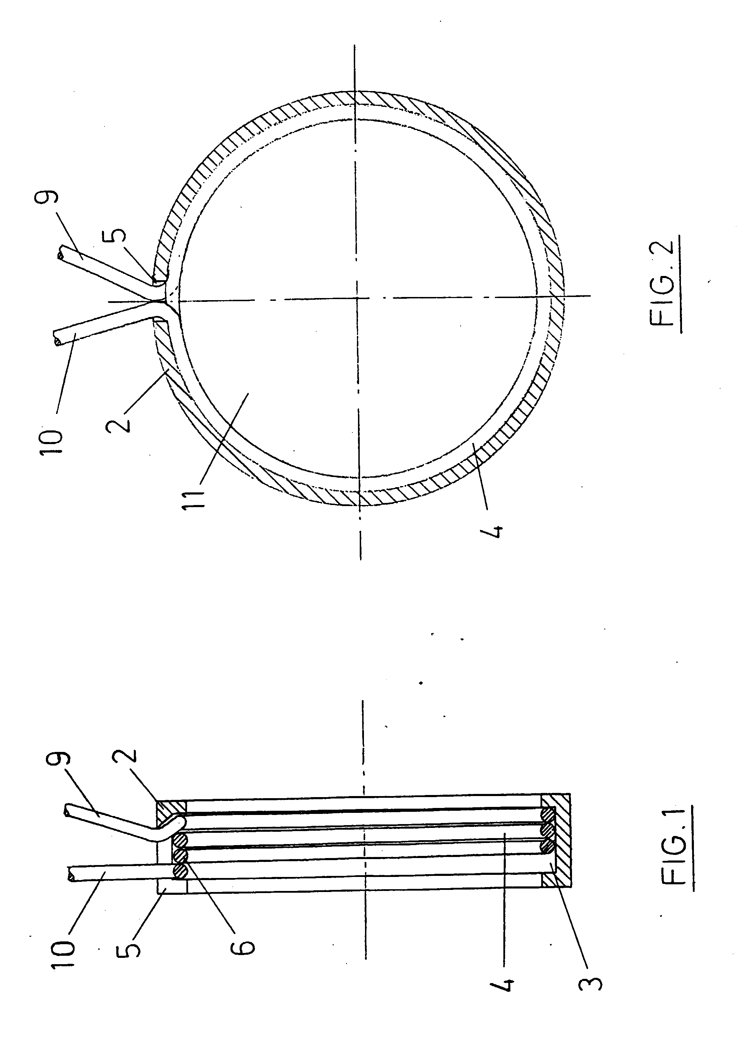

Die Fig. 1 zeigt in Schnittdarstellung einen Außenring bzw. Ferritring 2 eines Übertragers mit Innennut 3 und einer mittels der erfindungsgemäßen Einrichtung hergestellten Wicklung 4. Durch die Einlaßnut 5 ist zum einen der Wicklungsanfang 9 und zum anderen das Wicklungsende 10 von der Wicklung nach außen geführt. Die Wicklung, die aus einer oder mehreren Windungen besteht, wird unmittelbar nach dem Wickeln mit noch darinsteckendem Wickeldorn 7 durch Erhitzen einer in bekannter Weise auf dem Wicklungsdraht aufgebrachten Haftschicht zu einer Einheit zusammengebacken. Damit ist gewährleistet, daß der Innendurchmesser der Wicklung 4 mit dem Durchmesser der Ferritbohrung 11 übereinstimmt. Hier ist insofern eine große Genauigkeit erforderlich, als der Spalt im kompletten Übertrager zwischen Außen- und Innenring nur 25 µm betragen darf.

In Fig. 2 ist in einer Schnittdarstellung der Außenring 2 mit Wicklung 4 dargestellt. Die Wicklung besteht in diesem Ausführungsbeispiel aus drei Windungen. Es können, je nach Anwendungsfall, auch mehr oder weniger Windungen ausgeführt werden. Der Wicklungsanfang 9 führt durch die Einlaßnut 5 in die Innennut 3 des Ferritrings 2. Nachdem der Wicklungsdraht 6 die gewünschte Anzahl der Windungen gebildet hat, führt das Wicklungsende 10 durch die Einlaßnut 5 wieder aus dem Ferritring 2 heraus. Die Einlaßnut 5 ist so ausgeführt, daß Wicklungsanfang 9 und Wicklungsende 10 nebeneinander, ohne sich zu überkreuzen, liegen.

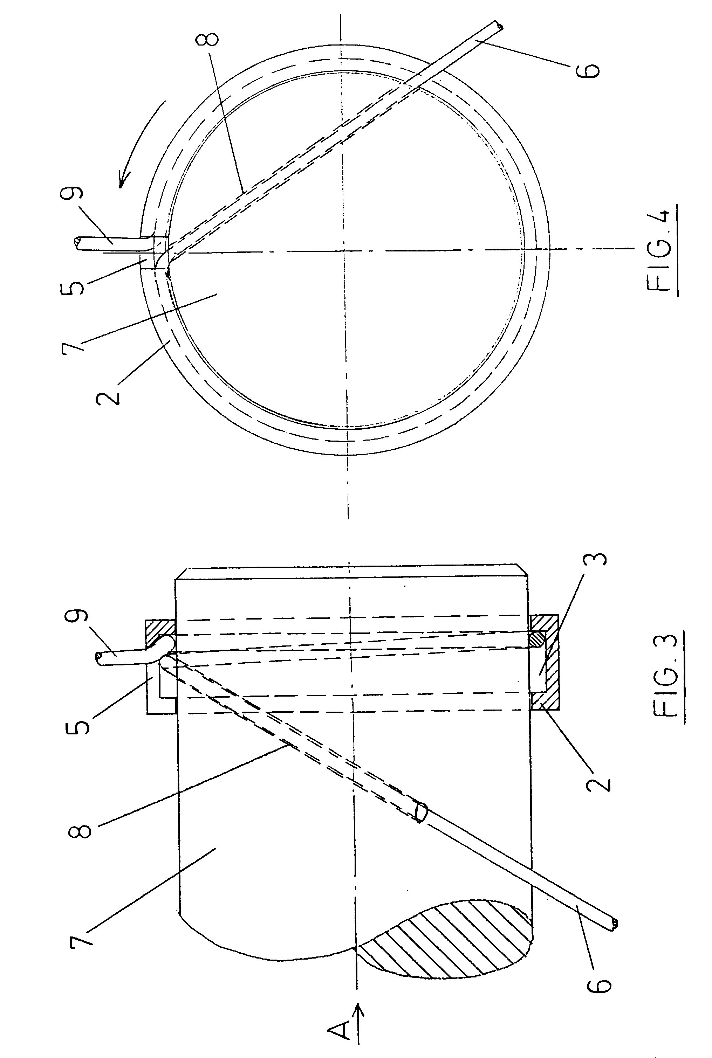

Die Fig. 3 stellt ein Beispiel der erfindungsgemäßen Einrichtung in Teilansicht dar. Auf einem Wickeldorn 7 ist ein Ferritring 2 aufgesteckt. Die Wicklung 4 ist schon teilweise ausgeführt. Die Wirkungsweise der erfindungsgemäßen Einrichtung ist folgendermaßen:

Durch eine Quer-Längsbohrung 8 des Wickeldorns 7 wird der Wicklungsdraht 6 geführt. Vor Beginn des Wickelns wird der Ferritring 2 so auf den Wickeldorn aufgeschoben, daß der Austritt des Wicklungsdrahtes 6 aus der Quer-Längsbohrung 8 mit der Einlaßnut 5 lagegleich zusammentrifft. Der Ferritring 2 wird nun soweit aufgeschoben, bis der Wicklungsdraht 6 an einer Flanke der Innennut 3 anliegt. Der Wicklungsanfang 9 ragt dabei aus dem Ferritring 2 durch die Einlaßnut 5 heraus. Der Ferritring 2 ist von einem, hier nicht näher gezeichneten, Teil der Einrichtung am Außendurchmesser erfaßt und eingespannt und wird von diesem Einrichtungsteil um die Wickeldornachse in Drehung versetzt. Der Ferritring führt dabei eine kontinuierliche Bewegung in Achsrichtung aus, die bei jeder Umdrehung des Ferritrings dem Wicklungsdrahtdurchmesser entspricht. So werden die einzelnen Windungen eng aneinanderliegend gewickelt.

In einer anderen Ausführungsart kann die Axialbewegung selbstverständlich auch vom Wickeldorn 7 ausgeführt werden. Ist die gewünschte Anzahl von Windungen erreicht, so wird das Drahtende abgehoben und auf die gewünschte Länge des Wicklungsendes 10 abgeschnitten. Der Durchmesser des Wickeldorns 7 ist nur geringfügig (µm-Bereich) kleiner als der Durchmesser der Ferritbohrung 11, so daß der Innendurchmesser der Wicklung 4 praktisch mit dem Durchmesser der Ferritbohrung übereinstimmt.

In der Fig. 4 ist die Einrichtung in Richtung des Pfeils A aus Fig. 3 dargestellt. Der Ferritring 2 ist dabei geschnitten gezeichnet. Der Wicklungsanfang 9 ist bereits aus dem Ferritring 2 herausgeführt. Der Wicklungsdraht 6 durchfährt die Quer-Längsbohrung 8. Der Ferritring wird in Pfeilrichtung in Drehung versetzt und somit werden die einzelnen Windungen erzeugt. Der Wicklungsdraht 6 wird dabei durch die Quer-Längsbohrung 8 nachgeführt.

Die erfindungsgemäße Einrichtung kann selbstverständlich auch so ausgeführt werden, daß der Ferritring 2 steht und der Wickeldorn 7 die Drehungen ausführt.

## Patentansprüche

1. Einrichtung zum Wickeln einer Innenspule eines Übertragers, wobei der Träger der Innenspule aus einem Ferritring (2) mit einer Innennut (3) zur Aufnahme der Wicklung (4) besteht und der Ferritring (2) radial eine Einlaßnut (5) zum Einführen und Ausführen des Wicklungsdrahtes (6) besitzt,
**dadurch gekennzeichnet**, daß
- ein Wickeldorn (7) mit einer Quer-Längsbohrung (8) vorhanden ist, durch die der Wicklungsdraht (6) geführt ist,
- der Ferritring (2) auf den Wickeldorn (7) aufgeschoben ist,
- der Wicklungsanfang (9) aus der Einlaßnut (5) herausgeführt ist,
- eine Spann- und Dreheinheit vorhanden ist, die den Ferritring (2) am Umfang umfaßt und ihn drehend und axial bewegt,
- das Wicklungsende (10) ebenfalls aus der Einlaßnut (5) herausgeführt ist.

2. Einrichtung nach Anspruch 1,
**dadurch gekennzeichnet**, daß die axiale Bewegung zwischen Ferritring (2) und Wickeldorn (7) vom Wickeldorn (7) ausgeführt wird.

3. Einrichtung nach den Ansprüchen 1 oder 2,
**dadurch gekennzeichnet**, daß die axiale Bewegung des Ferritrings (2) oder des Wickeldorns (7) während einer Umdrehung des Ferritrings (2) dem Durchmesser des Wicklungsdrahtes entspricht.

## Claims

1. Device for winding an inner coil of a transformer, in which the support for the inner coil comprises a ferrite ring (2) having an internal groove (3) for receiving the winding (4) and the ferrite ring (2) having radially an inlet groove (5) for introducing and bringing-out the winding wire (6), characterized in that
- a winding mandrel (7) having a transverse/longitudinal bore (8) is present through which the winding wire (6) is routed,
- the ferrite ring (2) is pushed onto the winding mandrel (7),
- the start (9) of the winding is brought out of the inlet groove (5),
- a clamping and rotating unit is present which grips the ferrite ring (2) and moves it rotationally and axially,
- the end (10) of the winding is also brought out of the inlet groove (5).

2. Device according to Claim 1, characterized in that the axial movement between ferrite ring (2) and winding mandrel (7) is carried out by the winding mandrel (7).

3. Device according to Claims 1 or 2, characterized in that the axial movement of the ferrite ring (2) or of the winding mandrel (7) during one revolution of the ferrite ring (2) corresponds to the diameter of the winding wire.

## Revendications

1. Dispositif pour enrouler une bobine intérieure d'un transformateur, dans lequel le support de la bobine intérieure est constitué par un anneau ferritique (2) comportant une gorge intérieure (3) destinée à recevoir la bobine (4), et l'anneau ferritique (2) comportant radialement une fente d'entrée (5) permettant l'entrée et la sortie du fil (6) de la bobine,
caractérisé en ce que:
- un mandrin de bobinage (7) est pourvu d'un perçage transversal-longitudinal (8), à travers lequel est guidé le fil (6) de la bobine,
- l'anneau ferritique (2) est emmanché sur le mandrin de bobinage (7),
- le début (9) de la bobine ressort de la fente d'entrée (5),
- une unité de serrage et de mise en rotation est prévue, qui saisit l'anneau ferritique (2) par la périphérie de celui-ci et l'entraîne en rotation et le déplace dans le sens axial,
- le bout terminal (10) de la bobine ressort aussi de la fente d'entrée (5).

2. Dispositif selon la revendication 1, caractérisé en ce que le mouvement axial entre l'anneau ferritique (2) et le mandrin de bobinage (7) est effectué par le mandrin de bobinage (7).

3. Dispositif selon les revendications 1 ou 2, caractérisé en ce que le déplacement axial de l'anneau ferritique (2) ou du mandrin de bobinage (7), sur un tour de l'anneau ferritique (2), correspond au diamètre du fil de la bobine.
